# EUROPEAN PATENT APPLICATION

(11) **EP 4 704 047 A1**
(43) Date of publication of application: **04.03.2026**
(21) Application number: 24197011.0
(22) Date of filing: 28.08.2024
(51) Int. Cl.: G06V 20/40

(54) **SPORTS TIMING BASED ON A CAMERA SYSTEM**

(71) Applicant: MyLaps B.V., 2012 PJ Haarlem (NL)
(72) Inventor: Verwoerd, Adriaan Klaas, Haarlem (NL); Bruins, Jenson, Haarlem (NL)
(74) Representative: Bird & Bird LLP - Hamburg

(57) **Abstract**

A method and a system for determining a passing time of an object passing a virtual timing line on a sports track, wherein the method includes the steps of receiving a sequence of video frames captured by at least one camera system, preferably a 2D camera system, each video frame being associated with a time instance and representing a picture of a sports track, the picture including an object moving on the sports track relative to, preferably towards, the camera system; detecting markers or marker features, for example a BIB or a symbol on the BIB, in at least part of the sequence of video frames, the markers or marker features being associated with the object moving relative to the camera system and determining a size of the detected markers or marker features, the size of the detected markers or marker features defining detected marker sizes; and, determining the passing time based on the detected marker sizes and the time instances associated with detected marker sizes, the determining including: comparing the detected marker sizes with a reference size, the reference size being indicative of a marker or a marker feature positioned at the virtual timing line.

## Description

### Technical field

The embodiments in this disclosure relate to vision-based sports timing and, in particular, though not exclusively, to methods and systems for vision-based sports timing, and a computer program product enabling a computer system to perform such methods.

### Background

Sports events, including car or motor racing, cycling, athletics, drones, and ice-skating, necessitate accurate and swift time registration of participating objects (e.g. persons or vehicles). Conventionally, timing systems rely on RFID technology, wherein participants are equipped with an UHF transponder. While RFID-based timing systems offer reliability and accuracy, they present drawbacks including: the need to equip each participant with a UHF transponder, susceptibility to environmental factors like moisture and reflections, and potential signal collisions in congested scenarios.

To address these challenges, alternative approaches like vision-based timing systems have developed. WO2021048446 describes a vision-based timing system for measuring the passing time of participants in a sports event, wherein a large number of participants may simultaneously or almost simultaneously pass a virtual timing line. This system includes a camera system positioned along a sports track wherein the camera system is capable of determining depth information for objects, using e.g. stereovision, that are visible in the pictures of the camera system. Calibration of the camera system is used to define a virtual timing line at a certain distance from the camera system so that the depth information associated with objects can be used to determine when an object passes the timing line.

While vision-based systems offer advantages over RFID-based counterparts, challenges persist in accurately timing and identifying all participants crossing a timing line. For example, in WO2021048446 stereovision-based camera systems need to be installed along the track before they can be used, which may impede the system's versatility and practicality. In particular, nowadays - when organizing a sports event - roads cannot be closed for extended periods before the event so it is important that the setup of the timing systems along the tracks can be installed and de-install fast. Installing cameras requires time and specialized personnel and equipment, leading to prolonged setup times that may disrupt traffic flow and event logistics. Furthermore, high-speed stereovision or 3D camera systems are expensive incurring substantial costs, especially when installing multiple camera systems along the track.

Hence, from the above it follows that there is a need for improved systems and methods for vision-based timing. In particular, there is a need for systems and methods for vision-based timing that can accurately determine passing times in sports events, particularly those with many participants, while being cheap, easy to set up and simple to use.

### Summary

As will be appreciated by one skilled in the art, aspects of the present invention may be embodied as a system, method or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Functions described in this disclosure may be implemented as an algorithm executed by a microprocessor of a computer. Furthermore, aspects of the present invention may take the form of a computer program product embodied in one or more computer readable medium(s) having computer readable program code embodied, e.g., stored, thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber, cable, RF, etc., or any suitable combination of the foregoing. Computer program code for carrying out operations for aspects of the present invention may be written in any combination of one or more programming languages, including an object-oriented programming language such as Java(TM), Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer, or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described below with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer program instructions. These computer program instructions may be provided to a processor, in particular a microprocessor or central processing unit (CPU), of a general purpose computer, special purpose computer, or other programmable data processing apparatus to produce a machine, such that the instructions, which execute via the processor of the computer, other programmable data processing apparatus, or other devices create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks. Additionally, the Instructions may be executed by any type of processors, including but not limited to one or more digital signal processors (DSPs), general purpose microprocessors, application specific integrated circuits (ASICs), field programmable logic arrays (FP- GAs), or other equivalent integrated or discrete logic circuitry.

The flowchart and block diagrams in the figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

In an aspect, the embodiments in this disclosure relate to a computer-implemented method for determining a passing time of an object passing a virtual timing line on a sports track. In an embodiment, the method may include receiving a sequence of video frames captured by at least one camera system, preferably a 2D camera system, each video frame being associated with a time instance and representing a picture of a sports track, the picture including an object moving on the sports track relative to, preferably towards, the camera system; detecting markers or marker features, for example a BIB or a symbol on the BIB, in at least part of the sequence of video frames, the markers or marker features being associated with the object moving relative to the camera system and determining a size of the detected markers or marker features, the size of the detected markers or marker features defining detected marker sizes; and, determining the passing time based on the detected marker sizes and the time instances associated with detected marker sizes, the determining including: comparing the detected marker sizes with a reference size, the reference size being indicative of a marker or a marker feature positioned at the virtual timing line.

Hence, the method provides an efficient and simple way of determining a passing time of an object moving over a sports track and passing a virtual timing line across the sports track. The embodiments rely on the insight that in sport events all participants or vehicles used by participants have a marker or a marker feature (e.g. a BIB or a race number on a vehicle) of a predetermined (standardized) size, which is determined by the sports organizer. This way, the marker or marker feature in captured images of objects passing a timing line at a predetermined distance from the camera will be the same for all objects. The embodiments in this disclosure use this do determine a passing time of the objects.

In an embodiment, determining the passing time further may comprise selecting a predetermined number of marker sizes that are closest to the reference size; and, determining the passing time based on the selected marker sizes, the associated time instances and the reference size.

In an embodiment, determining the passing time further may comprise: selecting marker sizes that are within a predetermined margin from the reference size; and, determining the passing time based on the selected marker sizes, associated time instances and the reference size. Hence, the passing time may be determined based on a number of time instances associated with video frames in which the marker or marker features have a size that is close to the reference size.

In an embodiment, determining the passing time further may comprise: fitting at least part of the detected marker sizes to a fitting function, the fitting function representing a marker size as a function of time; and, determining the passing time based on fitting function and the reference size. The fitting function provides a relation of the detected size of the marker or marker feature as a function of time thus allowing accurate determination of the passing time.

A passing time can be determined based on marker sizes determined using time-stamped video frames of the object before, after and during the passing of the timing line using a suitable interpolation function. This way, a passing time can be determined even if a video frame representing an object located at exactly the timing line or a video frame representing an object wearing a marker that is not visible (e.g. because blocked by another object) when passing the timing line is not available.

In an embodiment, the marker or marker feature may be detected using an algorithm, such as an object detection algorithm or an instance segmentation algorithm, preferably the algorithm including one or more deep neural networks, which are trained to receive at least one video frame at its input and to determine information regarding a detected marker or marker feature at its output.

In an embodiment, the information may include a location of the detected marker in a video frame and a size of the detected marker or marker feature. In an embodiment, the information may further include a probability score associated with the detected marker or marker feature.

In an embodiment, the algorithm may include one or more convolutional neural networks. In an embodiment, the input of the one or more convolutional neural networks may be configured to receive a complete video frame at its input.

In an embodiment, the information regarding the detected marker or marker feature may include coordinates of a bounding box encompassing the detected marker.

In an embodiment, the bounding box may define the smallest box that encompasses the detected marker of marker feature.

In an embodiment, the size of the marker or marker feature may be determined based on one of the dimensions of the bounding box, for example, height, width, area and/or circumference of the bounding box.

In an embodiment, the information regarding the detected marker or marker feature may include an area in the video frame comprising pixels representing the detected marker or marker feature.

In an embodiment, the size of the marker or marker feature may be determined based one of the dimensions, e.g. height, width, area, circumference, of the area of pixels representing the detected marker or marker feature.

In an embodiment, a machine learning algorithm, such as one or more deep learning algorithms, e.g. convolutional deep neural network system, for real-time object detection may be used to detect a marker or marker feature. In an embodiment, an object detection algorithm referred to as a YOLO (You Look Only Once) may be used as described in the article by Redman et al, You Only Look Once: Unified, Real-Time Object Detection, arXiv: 1506.02640. The YOLO algorithm uses a single convolution network that is trained for object detection as a regression problem. The YOLO model is configured to determine spatially separating bounding boxes and associated probabilities for each detected object in a video frame in a fast (up to 60 frames per second (fps) or higher) and accurate way. In another embodiment, an object detection algorithm referred to as Faster-R-CNN, may be used. The faster R-CNN model is configured to generate region proposals, extracts features for each region proposal and classify each of the region proposals as a background or one of a number of object classes for which the model is trained. In further embodiments, models like Vision Transformer(ViT), EfficientDet, or RetinaNet may be used. These models may be trained to detect markers and/or marker features in a sequence of video frames and to produce information about the size of the marker or marker features in the video frames.

In an embodiment, detecting markers or marker features may include: detecting an object moving towards the camera system in the sequence of video frames; detecting a marker or marker feature associated with the detected object.

In an embodiment, the method may further comprise: determining identification information based on identification features, for example symbols, codes, number and/or letters, associated with a detected marker or marker feature; and, identifying the object based on the identification information.

In an embodiment, an algorithm, preferably one or more deep neural networks, may be trained to receive a location, e.g. a region of interest (ROI), of a detected marker or marker features in a video frame and to generate identification information at its output, preferably the identification information including a code, e.g. a number and/or text, uniquely identifying an object associated with the detected marker or marker feature.

In an embodiment, the camera system may comprise one or more 2D cameras positioned along the side of the track and/or over the sports track. Hence, simple high speed 2D cameras may be used to accurately determine passing times of objects moving over the timing lines.

In anther embodiment, the camera system may include one or more 3D cameras.

In a further aspect, the embodiments may relate to a system for timing objects participating in a sports event comprising: a camera system; and, one or more processors configured to: receiving a sequence of video frames captured by at least one camera system, each video frame being associated with a time instance and representing a picture of a sports track, the picture including an object moving on the sports track relative to, preferably towards, the camera system; detecting markers or marker features, for example a BIB or a symbol on the BIB, in at least part of the sequence of video frames, the markers or marker features being associated with the object moving relative to the camera system and determining a size of the detected markers or marker features, the size of the detected markers or marker features defining detected marker sizes; and, determining the passing time based on the detected marker sizes and the time instances associated with detected marker sizes, the determining including: comparing the detected marker sizes with a reference size, the reference size being indicative of a marker or a marker feature positioned at the virtual timing line.

In an embodiment, the camera system is a 2D camera system.

In an embodiment, the system may be further configured to perform any of the method steps described above and/or may be further configured to include any of the features describe above.

The invention may also relate to a computer program product comprising software code portions configured for, when run in the memory of a computer, executing the method steps according to any of process steps described above.

The invention will be further illustrated with reference to the attached drawings, which schematically will show embodiments according to the invention. It will be understood that the invention is not in any way restricted to these specific embodiments.

### Brief description of the drawings

**Fig. 1** depicts a schematic of a timing system according to an embodiment of the invention;
**Fig. 2** depicts a method of determining a passing time according to an embodiment of the invention;
**Fig. 3** depicts some exemplary pictures of objects passing a virtual plane of a timing system according to an embodiment of the invention.
**Fig. 4** depicts a flow diagram of a method of determining a passing time according to an embodiment of the invention;
**Fig. 5** depicts a method of identifying the marker and determining its size of a timed object according to an embodiment of the invention;
**Fig. 6** depicts a system for determining a passing time according to an embodiment of the invention.
**Fig. 7** is a block diagram illustrating an exemplary data processing system that may be used for executing methods and software products described in this application.

### Description of the embodiments

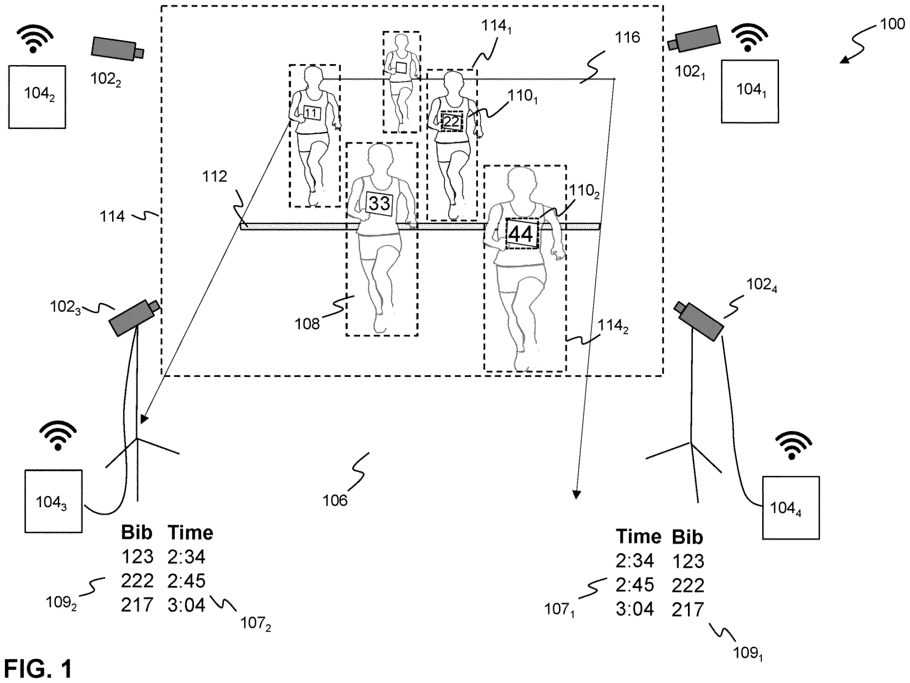

**Fig. 1** depicts a schematic of a timing system according to an embodiment of the invention. In particular, the figure depicts a vision-based sports timing system **100** including one or more camera systems **102₁₋₄** controlled by one or more processors **104₁₋₄** respectively. Each camera system may be configured to capture a scene of a sports track **106.** As shown in **Fig. 1****,** the one or more camera systems **102₁₋₄** may be positioned at the side or above the sports track in a position that ensures that the camera systems have a field of view 114 for generating pictures, e.g. sequences of video frames, of sufficient contrast and sharpness. The pictures may include part of a sports track that includes a detection area **116,** including a timing line **112** and objects **108** (e.g. athletes, an animal or vehicles) in the detection area passing the timing line. Each object may be associated with a unique marker **110_{1,2}** (e.g. a BIB of an athlete, a number of a racing horse or a number of a racing car or motor). In some embodiments, the marker may be used to identify the object. Typically, a marker may include information, e.g. printed information, such as numbers, letters, codes and/or symbols, which can be linked to information in a remote database or server. A marker may comprise marker features, i.e. specific parts of the marker that may be used for identifying the object, for providing publicity and/or for any other purpose. In some embodiments, at least part of the marker or a marker feature may be visible, e.g. black and white and/or colors. In other embodiment, at least part of the marker features may be not visible for humans, e.g. markers or marker features that can be detected based on the non-visible parts of the spectrum such as infrared (IR) or ultraviolet (UV). In some embodiments, markers such as sport BIBs, may be provided to participants by the sports event organizer upon registration. In some embodiments, a marker of a predetermined size may be a physical entity, e.g. a BIB attached to the athletes. In other embodiment, a marker of a predetermined size may be printed onto an object, a participant of a sports event or a vehicle (e.g. a car or a bike) of a participant of a sports event. This way, a marker and/or marker features can be uniquely linked with a participant so that the participant can be identified based on the marker and/or the marker features.

The camera system may be configured such that the captured pictures have sufficient contrast and sharpness in an area around the timing line (which may be a virtual timing line defined at a certain distance from the camera system). This allows captured video frames of moving objects and their associated markers to be processed accurately by a processor. The processor may for example execute an object detection algorithm to detect objects in the video frames. Camera parameters (e.g. angle, zoom, aperture, field of view, depth of field, focus distance, lens type and other camera (intrinsic) parameters) may be determined so that the camera system generates clear and sharp pictures of the area around a (virtual) timing line across the track at a predetermined distance from the camera system. When positioning one or more cameras of the camera system at a certain position along or over the sports track, objects, i.e. participants of the sports event, will move towards the camera system.

When capturing video frames of the sports track, a sequence of time-stamped video frames will be generated wherein the size of an object and the associated marker moving towards the camera system will increase in each picture. Hence, for predetermined camera parameters, a marker or a marker feature associated with an object will have a certain size in each of the video frames that is dependent on the distance between the object and the camera system. For example, as shown in **Fig 1****,** marker **110₂** associated with object **114₂** has a larger size (both in height and width) compared to the size of marker **110₁** associated with object **114₁,** which is positioned at the timing line, indicating that object **114₂** is closer to the camera system. Hence, during capturing time-stamped video frames of an object, e.g. an athlete or a vehicle, moving along the sports track, the size of the marker or the size of one or more marker features in the captured video frames provides information about the distance between the moving object in the video frames and the (static) camera system as a function of time.

For different camera parameters, the relation between the size of a marker (or one or more marker features) in a video frame and the distance between a marker and the camera system can be determined in advance. For example, this relation can be pre-programmed in the processor of the timing system in any form. Based on this information, in an embodiment, a predetermined distance between the camera and marker can be selected as the distance at which a passing time needs to be determined. This predetermined distance is the distance between the camera system and a virtual timeline and is linked to a predetermined size of a marker or marker feature in the video frames. This predetermined size of a marker or marker feature in a video frame may be referred to the reference size. Thus, by detecting and monitoring the size of the markers or marker features in the time-stamped video frames and comparing the monitored size with the reference size, the system is configured to determine at what time an object passes the virtual timing line.

In contrast to known vision-based timing systems which use depth information associated with a 3D imaging system, the timing system according to the embodiments in this disclosure (e.g. as shown in **Fig. 1**) rely on image processing of video frames wherein markers worn by objects moving along the sports track are detected and the size of the detected markers or marker features are monitored. Once a monitored marker size of marker features in a video frame matches the reference size, the timing information, e.g. time stamp, associated with the video frame may be used to determine a passing time of the object. Here, a marker size matching a reference size may refer to a situation wherein the monitored marker size is within a predetermined range from the reference size.

This way, passing times of multiple objects in the video frames may be determined in a simple and accurate way. The scheme is particular efficient both in terms of hardware and software as a conventional 2D imaging system can be used and only sequences of 2D images need to be processed. The relation between the size of a marker or the size of certain marker features detected in video frames and the distance between a marker and the camera system can be pre-programmed in the timing system. This relation may be different for different camera parameters. Hence, in an embodiment, the relation between a marker size or marker feature and the camera - marker distance may be programmed in the timing system for different camera configurations wherein each camera configuration is defined by a set of camera parameter settings.

The processor may execute one or more image processing algorithms configured to detect objects **114₁₋₂** and/or marker or marker features **110₁₋₂** in sequence of video frames that are generated by the camera system. Further, the one or more image processing algorithms may be configured to determine a size of marker or a marker feature in the sequence of video frames. Different schemes of algorithms may be used to detect the markers and monitor marker sizes in the video frames. In an embodiment, a machine learning model, such as a first deep learning model, may be used that is trained to determine regions of interests (ROIs) in each video frame, wherein each ROI is associated with a detected object. Further, each of the ROIs may be associated with a confidence score that is indicative of the probability that a ROI comprises the object. In a further embodiment, a second deep learning model may be used that is trained to determine ROIs, wherein each ROI is associated with a detected marker or marker feature. In yet another embodiment, a further deep learning model may be used that is trained to simultaneously predict ROIs for objects, i.e. participants in a sports event (e.g. running, horse racing, car or motor racing, etc.) and ROIs for markers associated with markers or marker features. In an embodiment, the ROls may be bounding boxes defined by bounding box coordinates. These deep learning models may be optimized for fast (real-time) detection of the objects and the markers.

In an embodiment, an object detection algorithm may determine in the one or more video frames one or more regions of interests (ROIs) **114₁₋₂** that belong to an object. Further, for each of these ROIs, the algorithm may further detect a marker or a marker feature of a predetermined known real-world size.

In an embodiment, the size of a marker detected in a video frame may be determined based on the size of a bounding box encompassing a detected marker. Based on such bounding box, the position and size of the marker or marker feature within the input video frame are determined. In an embodiment, the bounding box may be determined by an object detection or oriented object detection algorithm. In another embodiment, the bounding box may be determined based on semantic or instance segmentation of the marker (or a marker feature). The bounding box may be defined as the smallest shape that encloses the entire marker or its feature. In an embodiment, the bounding box may represent a rectangular shape that encloses the marker or its feature and it may be further defined by the coordinates of its top-left corner (x1, y1) and bottom-right corner (x2,y2) or by its center point (cx, cy) coordinates and its size, which is given by the width and height, measured in pixels. In another embodiment the bounding box can be rotated to align with the orientation of the marker it encompasses, therefore the bounding box may be defined by a center point coordinates, width, height and a rotation angle (i.e. the rotation angle of the rectangle with respect to the image axes). Thus, in an embodiment, a rectangular bounding box may have sides that are parallel to the image axes, while in another embodiment, the sides may not be parallel to the image axes. In a preferred embodiment, the size of the marker or marker feature may be determined based on the height of the bounding box. In that case, the size may be determined based on the length of a side of the bounding box that is parallel to the normal of the sports track.

In an embodiment, the size of the marker or marker feature may be determined using a size estimation model, e.g. deep neural network, that is trained on input images containing pictures of a scene including the track and one or more objects with associated markers or marker features of a predetermined size and outputs the detected marker size.

The camera system (or the computer system associated with the camera system) may include a module configured to detect moving objects and their associated marker or marker features, based on one or more video frames captured by the one or more camera modules. In an embodiment, the module may use machine learning algorithms to detect the markers and determine their sizes in the images captured by the camera system. In another embodiment, a machine learning algorithm may be employed to both detect the markers and determine the surrounding bounding box that encloses the marker or its features, therefore determining the marker or its feature sizes. The detected marker or marker feature is compared to the reference size of the marker or marker feature (which is indicative of the object passing the timing line), allowing the timing system to determine if an object has passed the timing line. Further, based on the one or more timestamped video frames, the object passing the timing line is associated with a passing time. In another embodiment, the marker may include marker features text (including alphanumeric characters or Arabic characters), symbols or a code (e.g. a QR code) that can be detected using machine learning algorithms and/or Optical Character Recognition (OCR) algorithms.

The camera system used in the embodiments of this application is not limited to 2D imaging techniques in the visible spectrum. Other imaging techniques such as 3D imaging techniques may be used as well. For example, a 3D camera with a high frame rate of at least 30 fps or more may be used. Further, imaging may not only include imaging in the visible part of the spectrum (e.g. RBG imaging) but imaging in the non-visible part of the spectrum such as infrared or near infrared imaging. Further, to increase the angle of view of the camera system, in some embodiments, one or more wide angle camera systems may be used, e.g. a 180-degree camera or a 360-degree camera. Also for such type of video formats, such as 360-video or immersive video, which is generated using special 360 camera systems, wherein the video is projected onto a 2D video frame. Additionally, the image techniques referred to above may be combined with other distance measuring techniques based on laser scanning, such as Lidar.

A plurality of timing systems as depicted in **Fig. 1** may be positioned at different locations along the track, generating one or more video frames within a detection grid **(116).** This way, each timing system may determine passing times based on one or more video frames of objects passing the timing line. The timing systems may support a wireless or wired connection that allows to setup a mesh-network of timing systems along the track. This way, information determined by one timing system may be used by one or more other timing systems that are part of the mesh network. In some embodiments the camera system is controlled remotely, as the one or more cameras are placed in a non-specific distance to the finish or timing line.

The data processing methods that are used by the timing system to determine the moving objects and their associated markers and to compute the marker sizes may require real-time imaging processing, therefore, in some embodiments a special purpose processor, such as a GPU, may be used to execute the computation intensive parts of the timing process. In other embodiments, the computation intensive parts may be executed on an edge network or a cloud server system. A CPU clock or a GPS clock may be used to link the one or more video frames with time information. For example, in an embodiment, each or at least part of the video frames may be linked to a time instance by time stamping the one or more video frames.

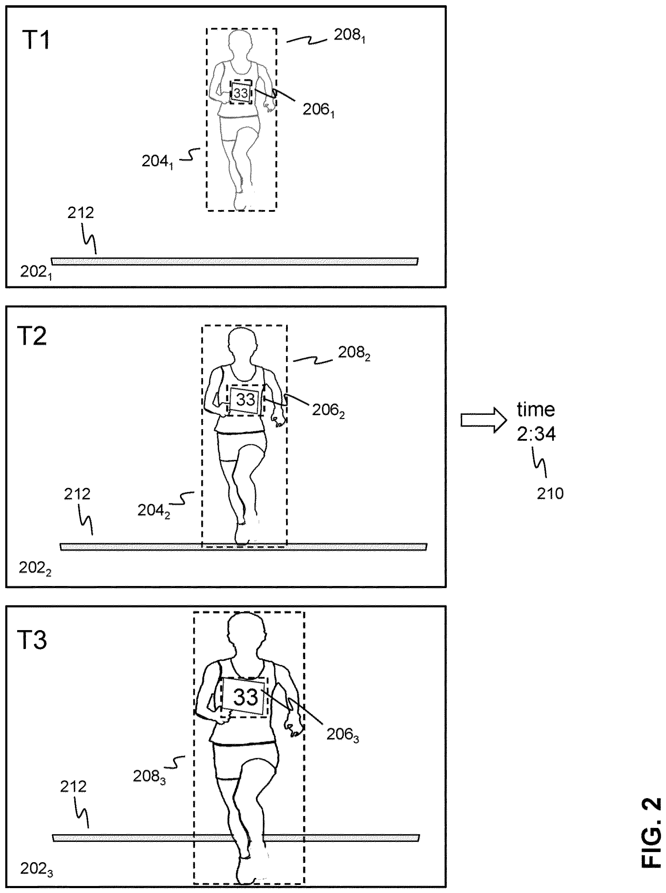

**Fig. 2** illustrates a method of determining a passing time according to an embodiment. In particular, **Fig. 2** depicts video frames of an object (in this example an athlete) passing a timing line. In particular, the figure depicts three samples **202₁₋₃** from a sequence of time-stamped video frames when the athlete moves over timing line **212.** These video frames are captured by the camera system and processed to determine a passing time based on the schemes describe with reference to the embodiments in this disclose. As shown in the figure, a first video frame **202₁** is captured at time instance T1, i.e. a time wherein the athlete is at a position behind timing line. A second video frame **202₂** associated with time instance T2 is captured wherein the athlete moves over the timing line and a third video frame **202₃** associated with time instance T3 wherein the athlete has passed the timing line.

A passing time module in the computer of the timing system may be configured to analyze the sequence of video frames to determine at what time instance the athlete has passed the timing line. To that end, an algorithm may process the video frames to detect objects in the video frames. The algorithm may detect one or more regions of interest **208₁₋₃** (ROIs) associated with an object, the ROls may include a marker or a marker feature of a certain size **206₁₋₃** which depends on the distance of the object relative to the camera that captures the video frames. The ROls may also include the object itself.

As explained with reference to **Fig. 1****,** the algorithm determines the size of the marker or marker features and compares the determined size with a predetermined reference size (computed at the timing line which is stored in the memory of the timing system) to determine the passing time.

The timing system thus monitors the athlete's position relative to the timing line based on the size of the marker of marker features in the captured video frames and monitors when the athlete has crosses the timing line. As described with reference to **Fig. 1****,** the passing time may be determined in different ways. The marker size may be determined based on the dimensions of the marker or marker features, e.g. height, width, as well as their combination. Possible marker features may include: symbols, textual content or a code (e.g. a QR code) embedded within the marker.

During the processing of the images, the detected marker sizes may be compared with the reference size. This way, when the camera system captures an object crossing the timing line, for each video frame a marker or marker feature is detected and a marker size or marker feature size is determined, which is subsequently compared with a reference size (which may be defined in a suitable unit, e.g. millimeters or number of pixels). A number of time-stamped video frames comprising markers having a size close to the reference size may be used to determine a passing time. This process ensures accurate detection of the object's passage of the timing line and determination of the passing time.

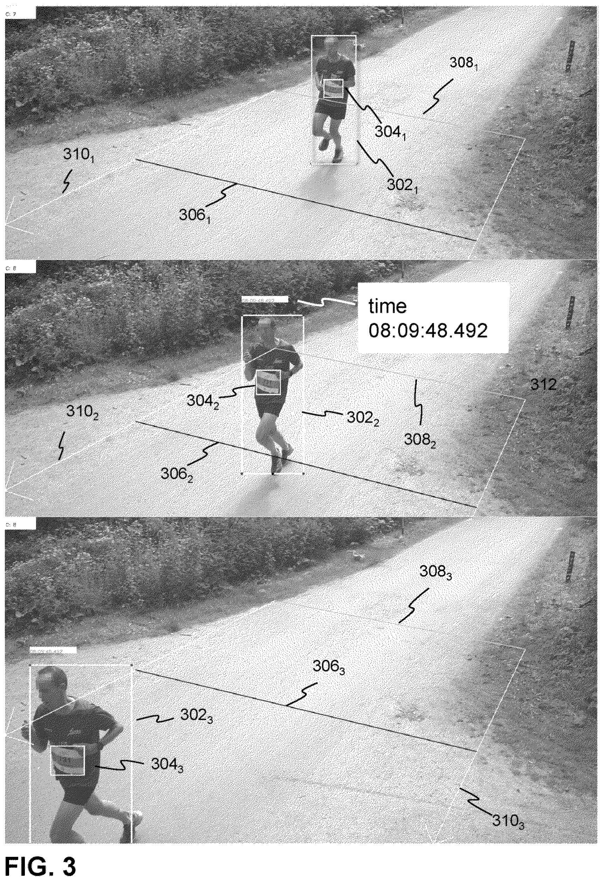

**Fig. 3** depicts examples of video frames in which objects associated with a markers, in this example a runner wearing a BIB, are detected and passing times indicative of the objects passing a virtual timing line **306₁₋₃** are computed based on the schemes as described with references to **Fig. 1** and **2** above.

As shown in the figure, an object **302₁₋₃** and a marker or marker feature **304₁₋₃** associated with the objects are detected. The object detection may include the determination of a ROI, e.g. a bounding box encompassing a detected object. The timing system may monitor the detected marker as it crosses the timing line. As the marker or marker feature (e.g. the BIB or a feature of the BIB) is of a predetermined known size, enabling the system to determine the passing time by comparing detected marker sizes with the reference size. Time stamps associated with video frames including marker or marker features having a size close to (or matching) the reference size are used to determine a passing time that is object passes the timing line **312.**
In some embodiments, the object detection algorithm may allow the definition of a detection area delimited by boundary lines **308₁₋₃** , **310₁₋₃** which define boundaries of certain area of the track in which image processing (such as object detection) takes place.

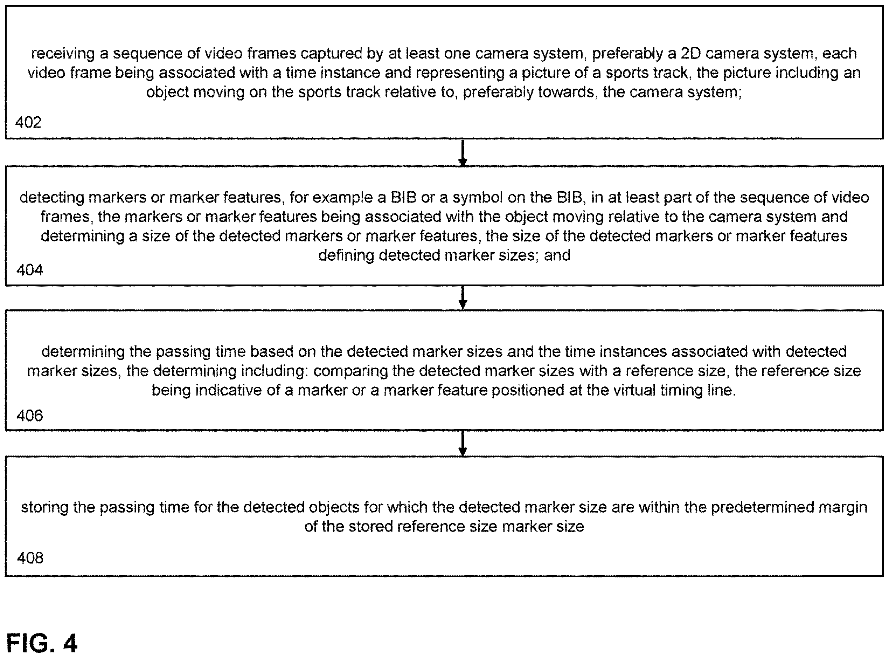

**Fig. 4** depicts a flow diagram of a method for determining a passing time according to an embodiment. As shown in this figure, the method may start with a processor, e.g. a processor of a video-based timing system, receiving a sequence of video frames captured by at least one camera system, each video frame being associated with a time instance and representing a picture of a sports track, the picture including an object moving on the sports track relative to, preferably towards, the camera system (step **402**).

The camera system may be positioned aside or over the sports track. In an embodiment, the camera system may be a 2D camera system. Each of the one or more objects in the captured video frames may be associated with a marker of a predetermined size, for example a BIB or a number plate on a racing motor or racing car. Alternatively and/or in addition, the objects in the captured video frames may be associated with a marker feature of a predetermined size.

In a further step **404,** markers or marker features, for example a BIB or a symbol on the BIB, may be detected in at least part of the sequence of video frames, wherein each video frame is associated with a time instance. The markers or marker features may be associated with the object moving relative to the camera system. Further, a size of a detected marker or marker feature may be determined. This size may be (referred to as a detected marker size.

To that end, the processor may execute one or more algorithms which are configured to detect the marker or marker feature in the video frames, wherein the marker or marker features is associated with an object moving relative to the camera system. The one or more algorithms may determine information associated with the size of the detected marker. In an embodiment, a machine learning algorithm, such as one or more deep learning algorithms, e.g. convolutional deep neural network system, for real-time object detection may be used to detect a marker or marker feature. In an embodiment, an object detection algorithm referred to as a YOLO (You Look Only Once) may be used as described in the article by Redman et al, You Only Look Once: Unified, Real-Time Object Detection, arXiv:1506.02640. The YOLO algorithm uses a single convolution network that is trained for object detection as a regression problem. The YOLO model is configured to determine spatially separating bounding boxes and associated probabilities for each detected object in a video frame in a fast (up to 60 frames per second (fps) or more) and accurate way. In another embodiment, an object detection algorithm referred to as Faster-R-CNN, may be used. The faster R-CNN model is configured to generate region proposals, extracts features for each region proposal and classify each of the region proposals as a background or one of a number of object classes for which the model is trained. In further embodiments, models like Vision Transformer(ViT), EfficientDet, or RetinaNet may be used. These models may be trained to detect markers and/or marker features in a sequence of video frames and to produce information about the size of the marker or marker features in the video frames.

In an embodiment, the marker or marker feature size may be determined based on a bounding box comprising a detected marker or marker feature. The size of the marker or marker feature may be determined based on the height and/or width or the combination of height and width of the bounding box.

Based on the detected marker sizes and the time instances associated with detected marker sizes (i.e. the time instances associated with the video frames in which a marker or marker feature is detected and for which a detected has been determined) the processor may determine a passing time. To that end, the detected marker sizes may be compared to a reference size, wherein the reference size is indicative of a marker or a marker feature positioned at the virtual timing line. (step **406**).

Based on the comparison, one or more marker sizes or marker feature sizes may be selected and used to determine a passing time. A set of marker sizes or marker features sizes may be selected wherein the set of marker sizes or marker feature sizes are determined in different video frames with different time instances. These marker sizes or marker feature sizes and the associated time instances may be used to determine a passing time. For example, in an embodiment, a predetermined number of marker sizes or marker feature sizes that are closest to the reference size may be selected. In another embodiment, marker sizes or marker feature sizes may be selected that are within a predetermined margin from the reference size. Based on these selected marker sizes and the reference size a passing time for an object passing the virtual timing line may be determined.

In a further embodiment, at least part of the detected marker sizes may be fitted to a fitting function, e.g. an interpolation function, so that the fitting function provides a relation between the marker size or marker feature size as a function of time. The determined fitting function and the reference size may be used to determine a passing time for an object passing the virtual timing line.

The passing time for the detected objects may be stored in a memory of the timing system (step **408**). The process depicted in **Fig. 4** may be used to detect multiple marker or marker features associated with multiple objects passing the virtual timing line.

Besides passing times other information associated with the object passing the timing line may be determined. For example, based on a sequence of time-stamped video frames and marker sizes the speed and the acceleration of the object in an area around the timing line may be determined.

A further feature analysis algorithm may be applied to the one or more detected objects and/or markers or marker features in the one or more video frames for determining features to identify the one or more detected objects in the one or more video frames. Based on these identifying features the identity of on object passing the timing line may be determined.

Different pictures from the sequence of one or more video frames may be used for the identification of the object that has crossed the virtual timing line. Hence, the video frames that are used for determining the passing time of an object may be different from the video frames that are used for determining the identity of the object.

The reference size used by the timing system, as described in the embodiments presented in this disclosure, may be set, e.g. programmed, or determined via any suitable means. The reference marker size may for example be determined using a simple calibration process wherein a marker of a predetermined size, such as a person wearing a BIB, is placed on the track at a predetermined distance form the camera, wherein the predetermined distances matches the desired distance at which the virtual timing line located. This allows the camera system and the object detection algorithm to detect the marker or marker feature and derive the size of markers or marker features in the video frames and to establish a reference marker size which is indicative of a marker positioned at the timing line that is located at a predetermined distance from the camera system.

The determined reference size of the marker or marker feature at the virtual timing line may be stored in the memory of the timing system so that it can be used during a sports event. The reference size of the marker or marker features may be stored in the memory together with further information, including for example camera settings. Thereafter, the timing system is ready to measure a passing time based on the size of the reference marker or marker feature as described with reference to the embodiments in this disclosure.

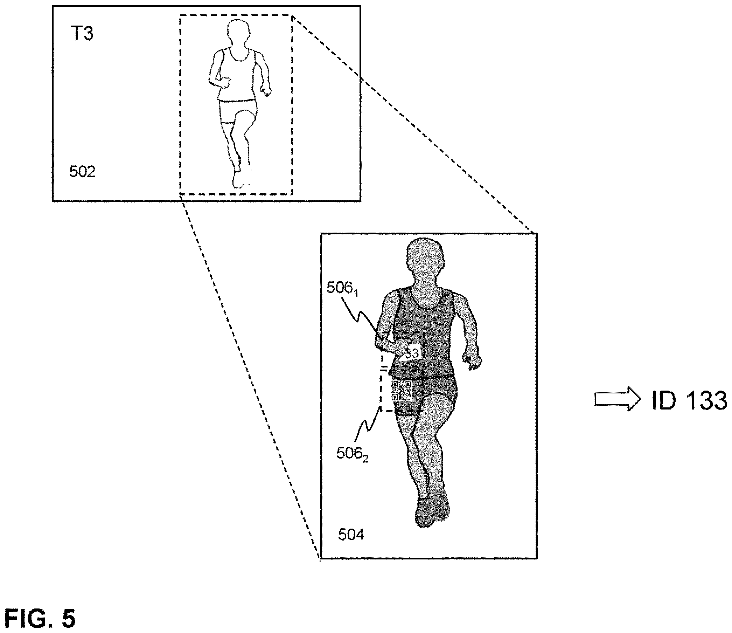

**Fig. 5** depicts a method of identification of a timed object according to an embodiment of the invention. When establishing a passing time for an object, the identity of the object is determined as well. To that end, the sequence of video frames may be analyzed by an object identification module. One or more regions of interest (ROIs) in the one or more video frames may be subjected to a feature analysis process which searches for predetermined features in a ROI. In an embodiment, a ROI relates to the marker or marker feature that is used to determine a passing time for the object. For example, as shown in **Fig. 5****,** an object **504** in a video frame **502** (e.g. video frame T3 from **Fig. 2**) may be subjected to a feature analysis algorithm configured to detect predetermined features including, but not limited to a predetermined marker **506₁,** marker features, text (including alphanumeric characters or Arabic characters) or a code **506₂** such as an QR code. In one embodiment, that marker that is used for determining the passing time may be used for object identification.

The analysis may be performed based on a set of ROIs of an object from different video frames during the passing of the timing line. It may be frequently the case, that the video frame that is used for determining the passing time, is not suitable for identification purposes. Hence, the object identification module may determine that the time-stamped video frame (e.g. video frame at T2 in the example of **Fig. 2**) represents a picture of the object crossing the timing line is not suitable for reliable identification of the object (e.g. because part of the marker was not clearly visible). In that case, the object identification module may determine that one or more further video frames (e.g. video frame at T3 in the example of **Fig. 2**) are suitable for reliable identification of the timed object. Any known object detection algorithm may be used for identifying features in the ROI, including conventional computer vision algorithms, machine learning and deep learning techniques. For example, in an embodiment, one or more deep neural network may be used for determining a ROI in a video frame, that comprises the object, and for determining certain features associated with an object.

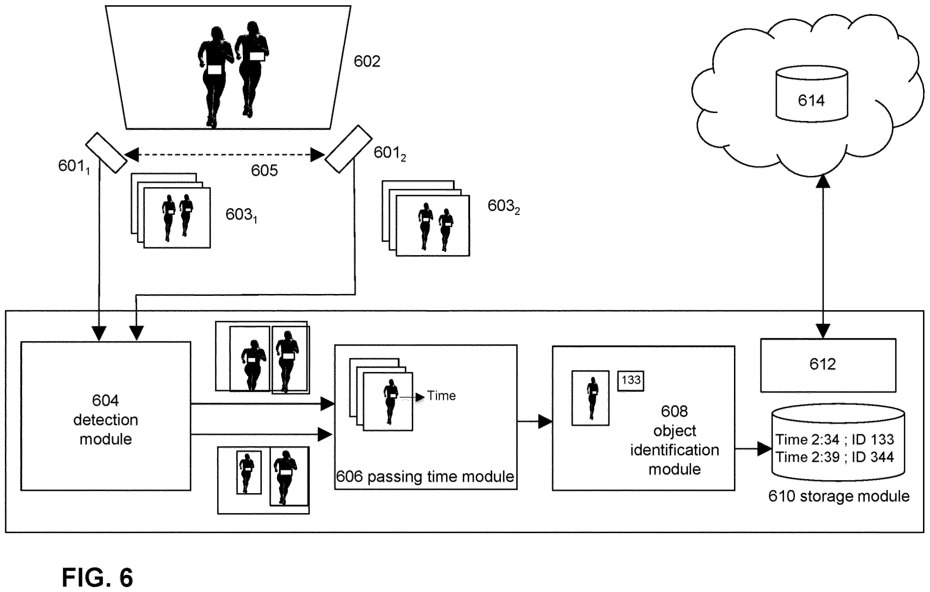

**Fig. 6** depicts an example of a system for determining a passing time according to an embodiment of the invention. The system may include one or more camera systems **601_{1,2}** and one or more processors running one or more modules configured to control the camera systems and to process the one or more video frames **603_{1,2}** generated by the camera systems. Each of the camera systems may be controlled to capture a sequence of video frames of a scene of a sports track comprising moving objects that pass a timing line represented by a timing line **602.** An event analyzer module **604** executed by one or the processors may be configured to perform object detection, including detection of the markers or marker features, in the sequence of video frames. To that end, the even analyzer module may use one or more algorithms as described with reference to the embodiments in this disclosure. The event analyzer may generate information about the size of the detected markers or marker features. Further, a passing time module **606** may determine a passing time based on the size information as e.g. described with reference to the embodiments in this disclosure. An object identification module **608** may may be configured to determine information, e.g. features of the objects, that can be used to identify an object for which a passing time is determined. The identification features may include information associated with the marker, e.g. a number on a BIB of a participant or a number on a vehicle of a participant, and, optionally, other information, e.g. features associated with clothing and/or shoes of a participant. These identification features may be used to reliably identify an object in the video frames. For example, the identification features may be compared with information of the participants that is stored in a database of the timing system or linked to the timing system.

Information determined by the system may be stored in a storage module of the timing system. This information may include one or more pictures of the object passing the timing line. Alternatively and/or in addition, information determined by the timing system may be communicated via a wireless or wired interface **612** to a server system or a cloud system **614** in the network.

It is submitted that the system architecture of the timing system depicted in **Fig. 6** is only an example of a timing system. Many other variants are possible without departing from the teaching of the embodiments in this disclosure. For example, some or all of the modules depicted in **Fig. 9** may be implemented as part of a hardware processor or a combined hardware/software processor, e.g. an application-specific integrated circuit (ASIC), a field programmable gate array (FPGA) or a system-on-a-chip (SoC). Alternatively and/or in addition, some or all of the modules depicted in **Fig. 9** may be implemented as software applications running on the one or more processors of the timing system or running as server applications on the server system or the cloud system.

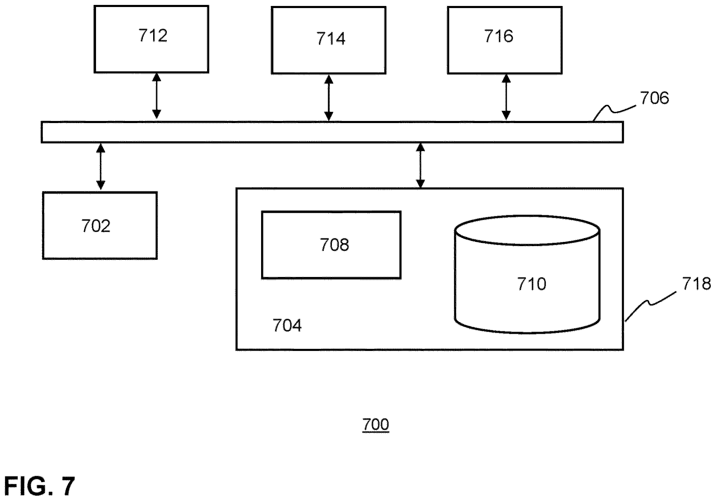

**Fig. 7** is a block diagram illustrating exemplary data processing systems described in this disclosure. Data processing system **700** may include at least one processor **702** coupled to memory elements **704** through a system bus **706.** As such, the data processing system may store program code within memory elements **704.** Further, processor **702** may execute the program code accessed from memory elements **704** via system bus **706.** In one aspect, data processing system may be implemented as a computer that is suitable for storing and/or executing program code. It should be appreciated, however, that data processing system **700** may be implemented in the form of any system including a processor and memory that is capable of performing the functions described within this specification.

Memory elements **704** may include one or more physical memory devices such as, for example, local memory **708** and one or more bulk storage devices **710.** Local memory may refer to random access memory or other non-persistent memory device(s) generally used during actual execution of the program code. A bulk storage device may be implemented as a hard drive or other persistent data storage device. The processing system **700** may also include one or more cache memories (not shown) that provide temporary storage of at least some program code in order to reduce the number of times program code must be retrieved from bulk storage device **710** during execution.

Input/output (I/O) devices depicted as input device 712 and output device 714 optionally can be coupled to the data processing system. Examples of input device may include, but are not limited to, for example, a keyboard, a pointing device such as a mouse, or the like. Examples of output device may include, but are not limited to, for example, a monitor or display, speakers, or the like. Input device and/or output device may be coupled to data processing system either directly or through intervening I/O controllers. A network adapter 716 may also be coupled to data processing system to enable it to become coupled to other systems, computer systems, remote network devices, and/or remote storage devices through intervening private or public networks. The network adapter may comprise a data receiver for receiving data that is transmitted by said systems, devices and/or networks to said data and a data transmitter for transmitting data to said systems, devices and/or networks. Modems, cable modems, and Ethernet cards are examples of different types of network adapter that may be used with data processing system **700.**

As pictured in **FIG. 7****,** memory elements **704** may store an application **718.** It should be appreciated that data processing system **700** may further execute an operating system (not shown) that can facilitate execution of the application. Application, being implemented in the form of executable program code, can be executed by data processing system **700,** e.g., by processor **702.** Responsive to executing application, data processing system may be configured to perform one or more operations to be described herein in further detail.

In one aspect, for example, data processing system **700** may represent a client data processing system. In that case, application **718** may represent a client application that, when executed, configures data processing system **700** to perform the various functions described herein with reference to a "client". Examples of a client can include, but are not limited to, a personal computer, a portable computer, a mobile phone, or the like.

In another aspect, data processing system may represent a server. For example, data processing system may represent an (HTTP) server in which case application **718,** when executed, may configure data processing system to perform (HTTP) server operations. In another aspect, data processing system may represent a module, unit or function as referred to in this specification.

The terminology used herein is for the purpose of describing particular embodiments only and is not intended to be limiting of the invention. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of the present invention has been presented for purposes of illustration and description, but is not intended to be exhaustive or limited to the invention in the form disclosed. Many modifications and variations will be apparent to those of ordinary skill in the art without departing from the scope and spirit of the invention. The embodiment was chosen and described in order to best explain the principles of the invention and the practical application, and to enable others of ordinary skill in the art to understand the invention for various embodiments with various modifications as are suited to the particular use contemplated.

The terminology used herein is for the purpose of describing particular embodiments only and is not intended to be limiting of the invention. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of the present invention has been presented for purposes of illustration and description, but is not intended to be exhaustive or limited to the invention in the form disclosed. The embodiment was chosen and described in order to best explain the principles of the invention and the practical application, and to enable others of ordinary skill in the art to understand the invention for various embodiments with various modifications as are suited to the particular use contemplated.

## Claims

1. A computer-implemented method for determining a passing time of an object passing a virtual timing line on a sports track comprising:
receiving a sequence of video frames captured by at least one camera system, preferably a 2D camera system, each video frame being associated with a time instance and representing a picture of a sports track, the picture including an object moving on the sports track relative to, preferably towards, the camera system;
detecting markers or marker features, for example a BIB or a symbol on the BIB, in at least part of the sequence of video frames, the markers or marker features being associated with the object moving relative to the camera system and determining a size of the detected markers or marker features, the size of the detected markers or marker features defining detected marker sizes; and,
determining the passing time based on the detected marker sizes and the time instances associated with detected marker sizes, the determining including: comparing the detected marker sizes with a reference size, the reference size being indicative of a marker or a marker feature positioned at the virtual timing line.

2. Method according to claim 1, wherein determining the passing time further comprises:
selecting a predetermined number of marker sizes that are closest to the reference size; and,
determining the passing time based on the selected marker sizes, the associated time instances and the reference size.

3. Method according to claim 1, wherein determining the passing time further comprises:
selecting marker sizes that are within a predetermined margin from the reference size; and,
determining the passing time based on the selected marker sizes, associated time instances and the reference size.

4. Method according to claim 1 determining the passing time further comprises:
fitting at least part of the detected marker sizes to a fitting function, the fitting function representing a marker size as a function of time; and,
determining the passing time based on fitting function and the reference size.

5. Method according to any of claims 1-4 wherein the marker is detected using an algorithm, such as an object detection algorithm or an instance segmentation algorithm, preferably the algorithm including one or more deep neural networks, which are trained to receive at least one video frame at its input and to determine information regarding a detected marker at its output, preferably the information including a location of the detected marker in a video frame, a size of the detected marker and, optionally, a probability score associated with the detected marker.

6. Method according to claim 5 wherein the algorithm includes one or more convolutional neural networks, preferably the input of the one or more convolutional neural networks being configured to receive a complete video frame at its input.

7. Method according to claims 5 or 6, wherein the information regarding the detected marker or marker feature includes coordinates of a bounding box encompassing the detected marker, preferably the bounding box defining the smallest box that encompasses the detected marker of marker feature and wherein the size of the marker or marker feature is determined based on one of the dimensions of the bounding box, for example, height, width, area, circumference.

8. Method according to claims 5 or 6, wherein the information regarding the detected marker or marker feature includes an area in the video frame comprising pixels representing the detected marker or marker feature and wherein the size of the marker or marker feature is determined based one of the dimensions, e.g. height, width, area, circumference, of the area of pixels representing the detected marker.

9. Method according any of claims 1-8, wherein detecting markers or marker features includes:
detecting an object moving towards the camera system in the sequence of video frames;
detecting a marker or marker feature associated with the detected object.

10. Method according to claims any of claims 1-9 further comprising:
determining identification information based on identification features, for example symbols, codes, number and/or letters, associated with a detected marker or marker feature;
identifying the object based on the identification information.

11. Method according to claim 10, wherein an algorithm, preferably one or more deep neural networks, is trained to receive a location, e.g. a region of interest (ROI), of a detected marker comprising identification features in a video frame and to generate identification information at its output, preferably the identification information including a code, e.g. a number and/or text, uniquely identifying the object.

12. Method according to any of the claims 1-11 wherein the camera system comprises one or more 2D cameras and/or one or more 3D cameras positioned along the side of the track and/or over the sports track.

13. System for timing objects participating in a sports event comprising:
a camera system; and,
one or more processors configured to:
receiving a sequence of video frames captured by at least one camera system, preferably a 2D camera system, each video frame being associated with a time instance and representing a picture of a sports track, the picture including an object moving on the sports track relative to, preferably towards, the camera system;
detecting markers or marker features, for example a BIB or a symbol on the BIB, in at least part of the sequence of video frames, the markers or marker features being associated with the object moving relative to the camera system and determining a size of the detected markers or marker features, the size of the detected markers or marker features defining detected marker sizes; and,
determining the passing time based on the detected marker sizes and the time instances associated with detected marker sizes, the determining including: comparing the detected marker sizes with a reference size, the reference size being indicative of a marker or a marker feature positioned at the virtual timing line.

14. System according to claim 14 wherein the system is further configured to perform any of the method steps according to claims 2-12.

15. Computer program product comprising software code portions configured for, when run in the memory of a computer, executing the method steps according to any of claims 1-12.
